# EUROPÄISCHE PATENTSCHRIFT

(11) **EP 3 756 470 B1**
(45) Veröffentlichungstag und Bekanntmachung des Hinweises auf die Patenterteilung: **27.09.2023**
(21) Anmeldenummer: 19182919.1
(22) Anmeldetag: 27.06.2019
(51) Int. Cl.: A23K 10/26, A23K 10/37, A23K 50/40

(54) **FUTTERMITTEL FÜR TIERE**
FEED FOR ANIMALS
ALIMENT POUR ANIMAUX

(43) Veröffentlichungstag der Anmeldung: 30.12.2020
(73) Patentinhaber: MVK Beteiligungs GmbH, 8083 St. Stefan im Rosental (AT)
(72) Erfinder: Derler, Wolfgang, 8264 Großwilfersdorf (AT); Kaufmann, Viktor, 8083 Sankt Stefan im Rosental (AT)
(74) Vertreter: Wirnsberger & Lerchbaum Patentanwälte OG

(56) Entgegenhaltungen:
- EP-A2- 0 285 409
- EP-A2- 2 992 762
- EP-B1- 0 285 409
- CN-A- 107 811 130
- CN-A- 108 112 804
- CN-A- 109 287 879
- CN-A- 109 329 637

## Beschreibung

Die Erfindung betrifft eine Mischung aus tierischen und pflanzlichen Bestandteilen, sowie Futtermittel für Tiere enthaltend diese Mischung.

### Hintergrund der Erfindung

Futtermittel für Tiere sind auf die jeweilige Tierart zugeschnitten. Sie sollen deren Nährstoffbedarf decken und damit die Gesundheit und gegebenenfalls auch die Leistung fördern. Futtermittel können aufgrund ihrer Inhaltsstoffe u.a. in folgende Gruppen eingeteilt werden: stärkereich (z.B. Hirse), ölhaltig (z.B. Raps) und eiweißreich (z.B. Presskuchen einer Ölextraktion).

Presskuchen entsteht als Nebenprodukt bei der Ölherstellung, beispielsweise bei der Speiseölherstellung aus Leinsamen. Aufgrund des hohen Proteingehalts werden Presskuchen aus der Speiseölherstellung als Futtermittel, aber auch als Nahrungsmittel für Menschen eingesetzt.

Produkte, welche bei der Schlachtung von Tieren entstehen, können grob in die Gruppen Muskelfleisch, Innereien und Separatorenfleisch eingeteilt werden. In der Richtlinie 2001/101/EG der Kommission bzgl. der Etikettierung und Aufmachung von Lebensmitteln sowie die Werbung hierfür, vom 26. November 2001, werden diese Gruppen näher definiert (siehe z.B. Seite 22). So darf die Bezeichnung Fleisch nur für Muskelfleisch der Skelettmuskulatur eingesetzt werden, welches einen gewissen Anteil an Fett und Bindegewebe nicht überschreitet. Das Herz, aber auch beispielsweise die Zunge, zählen nicht zur Skelettmuskulatur. Separatorenfleisch darf nicht als Fleisch gekennzeichnet werden.

Tierische Innereien, wie beispielsweise Leber, insbesondere Rinderleber, sind eine wertwolle Vitamin- und Nährstoffquelle. Leber zeichnet sich beispielsweise durch einen hohen Vitamin A- und Eisengehalt aus.

Zur optimaleren Abdeckung des Nährstoffbedarfs von Tieren können Mischfutter aus pflanzlichen und tierischen Bestandteilen eingesetzt werden. Aus Kanada ist beispielsweise ein gefriergetrocknetes Futtermittel der Firma Benny Bullys Sales Inc., bestehend aus Kürbis und Rinderleber bekannt.

Aufgrund der oben erwähnten positiven Eigenschaften wäre ein hoher Anteil an Leber im Futtermittel prinzipiell erstrebenswert.

Separatorenfleisch ist Fleisch, welches maschinell von Knochen gelöst wird und nicht die Anforderungen an Muskelfleisch erfüllt. Die maschinelle Loslösung vom Knochen kann beispielsweise durch Druckausübung auf löchrige Zylinder, Hochdruckwalzen, rotierende Bürstenköpfe oder einen Hochdruckwasserstrahl erfolgen. Aufgrund des hohen Aufkommens an Separatorenfleisch bei der Schlachtkörperzerlegung (Auslösen der Knochen aus dem Muskelfleisch) stellt Separatorenfleisch eine kostengünstige Grundlage für die Herstellung von Futtermittel für Tiere dar.

Allerdings führt ein höherer Anteil an Innereien und Separatorenfleisch in Futtermitteln zu Problemen bei der Verarbeitung, da insbesondere sowohl zerkleinerte native Innereien, als auch Separatorenfleisch sehr flüssig und aufgrund dessen schwierig zu verarbeiten sind.

Bekannte Futtermittel weisen daher beispielsweise einen Anteil an zerkleinerten Innereien, insbesondere gemahlener Leber von weniger als 20 Gew.% auf.

Unter "nativen Innereien" werden hier und im Folgenden Innereien bezeichnet, welche im Anschluss an die Schlachtung des Tieres, abgesehen von der Heraustrennung aus dem Tier, der Reinigung, einer Zerkleinerung, insbesondere einer Mahlung, und einer etwaigen Kühlung/Tiefkühlung nicht behandelt werden. Insbesondere sind "native Innereien" nicht getrocknet.

Aus der EP 2 992 762 A2 ist ein Tierfutter der Art "Stückchen in Soße" bekannt. Die Stückchen enthalten mindestens aus 75% aus Fleisch gewonnene Zutaten, welche unbehandelt gemahlen sind. Die Stückchen bestehen zu einem großen Teil aus Innereien, beispielsweise Schweineleber und Rinderlunge. Die Stückchen enthalten weiters Sojamehl. Ein weiterer wichtiger Bestandteil der Stückchen ist getrocknetes Trockenblutplasma. Das Sojamehl und das Trockenblutplasma sind dabei insbesondere für die Bindung der Mischung zuständig.

Die EP 0 285 409 A1 zeigt ein Tierfutter, welches dem Tierfutter der EP 2 992 762 A2 sehr nahe kommt. Auch hier werden ca. 50% zerkleinerter tierischer Innereien verwendet, zusammen mit Sojamehl und getrocknetem Blutplasma.

Die CN 109 329 637 A zeigt ein Tierfutter mit 10 bis 20% zerkleinerten Innereien, Maismehl und anderen Zutaten wie Fischmehl.

Die CN 109 287 879 A offenbart ein Tierfutter mit 20 bis 30% zerkleinerter Hühnerleber, Maismehl und anderen Zutaten wie Gemüse.

Die CN 107 811 130 A offenbart ein Tierfutter mit 10 bis 20% zerkleinerter Leber, Mehl und anderen Zutaten wie Fischmehl.

### Kurzbeschreibung der Erfindung

Aufgabe der vorliegenden Erfindung ist es daher, ein Futtermittel mit einem hohen Anteil an Innereien und/oder Separatorenfleisch bereitzustellen.

Die Aufgabe wird gelöst durch eine Mischung umfassend
a) zerkleinertes tierisches Material, ausgewählt aus der Gruppe bestehend aus zerkleinerten, insbesondere gemahlenen nativen Innereien, Separatorenfleisch und Mischungen daraus, und
b)bei der Herstellung von Speiseöl aus pflanzlichen Rohstoffen gewonnenen Rückständen,
wobei der Anteil an zerkleinertem tierischen Material in der Mischung 20 Gew.% oder mehr, insbesondere 40 Gew.% bis 80 Gew.% beträgt.

Weiters sind die Rückstände aus der Gruppe bestehend aus Rückständen der Speiseölherstellung aus Lein, Kürbis, Hanf, Sonnenblumen, Raps und Mischungen daraus ausgewählt.

Weiters wird die Aufgabe durch ein Futtermittel für Tiere, insbesondere Haustiere, enthaltend diese Mischung gelöst.

### [weiter auf Seite 3 der ursprünglichen Offenbarung]

Die wesentlichen Merkmale der Erfindung sind anhand von bevorzugten Ausführungsformen dargestellt.

### Detaillierte Beschreibung der Erfindung

Es hat sich überraschenderweise gezeigt, dass erfindungsgemäße Mischungen eine kompakte und formbare Masse ergeben, welche sich hervorragend als Futtermittel eignet.

Separatorenfleisch weist, ebenso wie zerkleinerte native Innereien, einen hohen Feuchtigkeitsgehalt auf.

Aufgrund der Art der Herstellung von Separatorenfleisch weist es bereits eine Größe von 0,5 mm bis 3 mm auf. Daher ist eine Zerkleinerung des Separatorenfleisches für den Einsatz in der erfindungsgemäßen Mischung nicht nötig.

Durch die maschinelle Ablösung des Fleisches von den Knochen enthält Separatorenfleisch einen gewissen Anteil an Kalzium, welcher über jenem von Muskelfleisch oder Innereien liegt. Dieser erhöhte Kalziumgehalt ist auch in der erfindungsgemäßen Mischung nachweisbar.

Ebenso ist das Vorhandensein von nativen Innereien anhand deren typischer Eigenschaften in der erfindungsgemäßen Mischung nachweisbar.

Die erfindungsgemäße Mischung, welche eine kompakte und formbare Masse ergibt, eignet sich bereits gut für die Weiterverarbeitung. So kann beispielsweise unmittelbar aus der erfindungsgemäßen Mischung durch bloße Trocknung oder Gefriertrocknung ein Futtermittel hergestellt werden. Die Mischung kann aber auch frisch (in Vakuum verpackt), gegart oder gefroren als Futtermittel verkauft werden.

In einer bevorzugten Ausführungsform ist die erfindungsgemäße Mischung dadurch gekennzeichnet, dass die durchschnittliche Partikelgröße des zerkleinerten tierischen Materials bei 15 mm und weniger, insbesondere 0,5 mm bis 3 mm liegt.

Dies ist deutlich höher als die Partikelgröße von gemahlenen Innereien, insbesondere Leber, die für Nahrungsmittel für den Menschen eingesetzt werden kann. Hier muss jedenfalls auf weniger als 500 µm, oder 200 µm und noch weniger gemahlen werden.

In einer weiteren bevorzugten Ausführungsform ist die erfindungsgemäße Mischung durch einen Feuchtigkeitsgehalt von zumindest 10 Gew.%, insbesondere 10 bis 50 Gew.% gekennzeichnet.

Beispiele für Innereien, welche in der erfindungsgemäßen Mischung umfasst sein können, sind Leber, Herz, Lunge, Magen und Niere.

Bevorzugt wird Leber als Innerei eingesetzt.

Die Leber kann vom Rind, Schwein, Geflügel, Schaf, Ziege, Pferd, Hase oder Kaninchen stammen.

Bevorzugt wird Rinderleber als Leber eingesetzt.

Die erfindungsgemäße Mischung ist dadurch gekennzeichnet, dass die Rückstände aus der Gruppe bestehend aus Rückständen der Speiseölherstellung aus Lein, Kürbis, Hanf, Sonnenblumen, Raps und Mischungen daraus ausgewählt sind.

Insbesondere kann es sich bei den Rückständen je nach pflanzlichem Rohstoff um Rückstände einer Pressung und/oder Extraktion des Rohstoffs handeln.

In einer weiteren bevorzugten Ausführungsform ist die erfindungsgemäße Mischung dadurch gekennzeichnet, dass sie einen weiteren pflanzlichen Bestandteil enthält.

In dieser bevorzugten Ausführungsform ist die erfindungsgemäße Mischung dadurch gekennzeichnet, dass der weitere pflanzliche Bestandteil aus der Gruppe bestehend aus Süßkartoffeln, Äpfeln, Bananen und Kürbisfruchtfleisch ausgewählt ist.

Durch den weiteren pflanzlichen Bestandteil wird die Konsistenz der Mischung verändert.

Die Mischung wird flüssiger. Infolgedessen eignet sich die erfindungsgemäße Mischung in dieser Ausführungsform zur Herstellung von frischen, gegarten, gefrorenen, gefriergetrocknet und getrockneten Futtermitteln, insbesondere jedoch für frische (in Vakuum verpackt), gegarte und gefrorene Futtermittel. Letztere werden den Tieren als Nassfutter gefüttert. Dabei ist es von Vorteil, den Flüssigkeitsgehalt der erfindungsgemäßen Mischung durch die Zugabe der weiteren pflanzlichen Bestandteil zu erhöhen.

Alle Mischungsbestandteile (zerkleinertes tierisches Material, durch Pressung pflanzlicher Rohstoffe gewonnene Pressrückstände, weiterer pflanzlicher Bestandteil) können bevorzugt glutenfrei, sojafrei und/oder laktosefrei sein.

Das erfindungsgemäße Futtermittel ist besonders für Haustiere wie Hunde und Katzen geeignet.

In einer bevorzugten Ausführungsform ist das Futtermittel dadurch gekennzeichnet, dass der Anteil der Mischung zumindest 10 Gew.%, bevorzugt 90 Gew.% und mehr beträgt.

Bevorzugt ist das erfindungsgemäße Futtermittel frei von Konservierungsstoffen und Zusatzstoffen, wie Geschmackverstärker.

### Beispiele

### Beispiel 1

Als zerkleinertes tierisches Material wurde 80 kg Rinderleber aus der Schlachtung (lediglich gekühlt), mit einem Feuchtigkeitsgehalt von ca. 80 % eingesetzt. Diese wurden in einem Fleischwolf mit einer Körnung von 5 mm gemahlen. Dadurch ergab sich eine Partikelgröße von 5 mm und kleiner. Die Masse wurde mit 20 kg Pressrückstand, welcher auf herkömmliche Weise beim Pressvorgang bei der Herstellung von Ölen gewonnen und anschließend gemahlen und gesiebt worden war, vermischt. Die erhaltene Mischung hatte einen Feuchtigkeitsgehalt von ca. 65 % (Trockensubstanz ca. 35 %) und konnte in folgenden Formen als Futtermittel eingesetzt werden: frisch (oder durch Einfrieren haltbar gemacht), in Formen oder Dosen erhitzt, und getrocknet (z.B. als Kekse geformt).

### Beispiel 2

Als zerkleinertes tierisches Material wurde 50 kg Separatorenfleisch (gekühlt), mit einem Feuchtigkeitsgehalt von ca. 80 % eingesetzt. Eine Zerkleinerung des Separatorenfleisches für den Einsatz in der erfindungsgemäßen Mischung war aufgrund des Herstellungsprozesses des Separatorenfleisches und der damit einhergehenden Partikelgröße nicht nötig. Analog zu Beispiel 1 wurde Pressrückstand hinzugefügt, mit dem Unterschied, dass 30 kg Pressrückstand eingesetzt wurden. Zusätzlich wurde ein weiterer pflanzlicher Bestandteil, 20 kg gemahlene Süßkartoffeln, zugemischt. Die erhaltene Mischung hatte einen Feuchtigkeitsgehalt von ca. 58 % (Trockensubstanz ca. 42 %) und wurde aufgrund des hohen Anteils an Trockensubstanz getrocknet und in Form von Keksen als Futtermittel eingesetzt. Der höhere Trockensubstanzgehalt im Vergleich zu Beispiel 1 ergab sich durch den höheren Anteil an Pressrückstand im Verhältnis zum Anteil des zerkleinerten tierischen Materials. Aufgrund dieses Unterschiedes hatte die Mischung trotz Zugabe des weiteren pflanzlichen Bestandteils keinen höheren Feuchtigkeitsgehalt als die Mischung in Beispiel 1.

## Patentansprüche

1. Eine Mischung umfassend
a) zerkleinertes tierisches Material, ausgewählt aus der Gruppe bestehend aus zerkleinerten, insbesondere gemahlenen nativen Innereien, Separatorenfleisch und Mischungen daraus,
wobei native Innereien Innereien sind, welche im Anschluss an die Schlachtung des Tieres, abgesehen von der Heraustrennung aus dem Tier, der Reinigung, einer Zerkleinerung, und einer etwaigen Kühlung/Tiefkühlung nicht behandelt werden,
und
b) bei der Herstellung von Speiseöl aus pflanzlichen Rohstoffen gewonnenen Rückständen,
wobei der Anteil an zerkleinertem tierischen Material in der Mischung 20 Gew.% oder mehr, insbesondere 40 Gew.% bis 80 Gew.% beträgt,
**dadurch gekennzeichnet, dass** die Rückstände aus der Gruppe bestehend aus Rückständen der Speiseölherstellung aus Lein, Kürbis, Hanf, Sonnenblumen, Raps und Mischungen daraus ausgewählt sind.

2. Mischung gemäß Anspruch 1, **dadurch gekennzeichnet, dass** die durchschnittliche Partikelgröße des zerkleinerten tierischen Materials 15 mm und weniger, insbesondere 0,5 mm bis 3 mm beträgt.

3. Mischung gemäß Anspruch 1 oder 2, **gekennzeichnet durch** einen Feuchtigkeitsgehalt von zumindest 10 Gew.%, insbesondere 10 bis 50 Gew.%.

4. Mischung gemäß einem der vorhergehenden Ansprüche, **dadurch gekennzeichnet, dass** die Innereien Leber, insbesondere Rinderleber sind.

5. Mischung gemäß einem der vorhergehenden Ansprüche, **dadurch gekennzeichnet, dass** sie einen weiteren pflanzlichen Bestandteil enthält.

6. Mischung gemäß Anspruch 5, **dadurch gekennzeichnet, dass** der weitere pflanzliche Bestandteil aus der Gruppe bestehend aus Süßkartoffeln, Äpfeln, Bananen und Kürbisfruchtfleisch ausgewählt ist.

7. Futtermittel für Tiere, insbesondere Haustiere, enthaltend eine Mischung gemäß einem der vorherigen Ansprüche.

8. Futtermittel gemäß Anspruch 7, **dadurch gekennzeichnet, dass** der Anteil der Mischung zumindest 10 Gew.%, bevorzugt 90 Gew.% oder mehr beträgt.

## Claims

1. A mixture comprising:
a) comminuted animal material selected from the group consisting of comminuted, in particular ground, native offal, separated meat and mixtures thereof,
wherein native offal is offal which has not been treated in connection with the slaughter of the animal apart from removal from the animal, cleaning, a comminution and any possible cooling/deep freezing,
and
b) residues obtained during the manufacture of edible oil from plant-based raw materials,
wherein the proportion of comminuted animal material in the mixture is 20 % by weight or more, in particular 40 % by weight to 80 % by weight,
**characterized in that** the residues are selected from the group consisting of residues from the manufacture of edible oil from linseed, pumpkin, hemp, sunflowers, rapeseed and mixtures thereof.

2. The mixture as claimed in claim 1, **characterized in that** the average particle size of the comminuted animal material is 15 mm and less, in particular 0.5 mm to 3 mm.

3. The mixture as claimed in claim 1 or claim 2, **characterized by** a moisture content of at least 10 % by weight, in particular 10 % to 50 % by weight.

4. The mixture as claimed in one of the preceding claims, **characterized in that** the offal is liver, in particular beef liver.

5. The mixture as claimed in one of the preceding claims, **characterized in that** it contains a further plant-based component.

6. The mixture as claimed in claim 5, **characterized in that** the further plant-based component is selected from the group consisting of sweet potatoes, apples, bananas and pumpkin flesh.

7. A food for animals, in particular domestic animals, containing a mixture as claimed in one of the preceding claims.

8. The animal food as claimed in claim 7, **characterized in that** the proportion in the mixture is at least 10 % by weight, preferably 90 % or more.

## Revendications

1. Un mélange, comprenant
a) une matière animale broyée, sélectionnée dans le groupe constitué d'abats natifs, de viande séparée mécaniquement, broyés notamment moulus et de leurs mélanges,
des abats natifs étant des abats qui, suite à l'abattage de l'animal ne sont pas traités, à l'exception de leur retrait de l'animal, du nettoyage, d'un broyage et d'une éventuelle réfrigération / congélation,
et
b) des résidus récupérés lors de la production d'huiles alimentaires d'origine végétale,
la proportion de matière animale broyée dans le mélange s'élevant à 20 % en poids ou plus, notamment à de 40 % en poids à 80 % en poids,
**caractérisé en ce que** les résidus du groupe constitué des résidus de la production d'huiles alimentaires sont sélectionnés parmi le lin, la courge, le chanvre, le tournesol, le colza et leurs mélanges.

2. Mélange selon la revendication 1, **caractérisé en ce que** la taille moyenne des particules de la matière animale broyée s'élève à 15 mm et moins, notamment à de 0,5 mm à 3 mm.

3. Mélange selon la revendication 1 ou 2, **caractérisé par** un taux d'humidité d'au moins 10 % en poids, notamment de 10 à 50 % en poids.

4. Mélange selon l'une quelconque des revendications précédentes, **caractérisé en ce que** les abats sont du foie, notamment du foie bovin.

5. Mélange selon l'une quelconque des revendications précédentes, **caractérisé en ce qu'**il contient un ingrédient végétal supplémentaire.

6. Mélange selon la revendication 5, **caractérisé en ce que** l'ingrédient végétal supplémentaire est sélectionné dans le groupe constitué de patates douces, de pommes, de bananes et de pulpe de courges.

7. Alimentation pour animaux, notamment pour animaux domestiques, contenant un mélange selon l'une quelconque des revendications précédentes.

8. Alimentation pour animaux selon la revendication 7, **caractérisée en ce que** la proportion du mélange s'élève à au moins 10 % en poids, de préférence à 90 % en poids ou plus.
